# EUROPÄISCHE PATENTSCHRIFT

(11) **EP 2 342 063 B1**
(45) Veröffentlichungstag und Bekanntmachung des Hinweises auf die Patenterteilung: **07.02.2018**
(21) Anmeldenummer: 09782896.6
(22) Anmeldetag: 10.09.2009
(51) Int. Cl.: B29C 47/86, B29C 47/90, B29C 47/92

(54) **VORRICHTUNG UND VERFAHREN ZUM KÜHLEN VON KUNSTSTOFFPROFILEN**
DEVICE AND METHOD FOR COOLING PLASTIC PROFILES
PROCÉDÉ ET DISPOSITIF DE REFROIDISSEMENT DE PROFILÉS EN PLASTIQUE

(30) Priorität: 15.09.2008 DE 102008047210
(43) Veröffentlichungstag der Anmeldung: 13.07.2011
(73) Patentinhaber: battenfeld-cincinnati Germany GmbH, 32547 Bad Oeynhausen (DE)
(72) Erfinder: HACKL, Leopold, A-3434 Katzelsdorf (AT); DOBROWSKY, Josef, A-3011 Tullnerbach (AT); ZACHER, Georg, A-1220 Wien (AT); GORILOVSKIY, Miron, I., Moskau 119530 (RU)
(86) Internationale Anmeldenummer: PCT/EP2009/061783
(87) Internationale Veröffentlichungsnummer: WO 2010/029144

(56) Entgegenhaltungen:
- EP-A2- 0 180 571
- WO-A1-97/38844
- WO-A2-2006/050549
- WO-A2-2008/064140
- JP-A- 2 270 534
- US-A1- 2006 288 699

## Beschreibung

Die Erfindung betrifft eine Extrusionslinie zur Herstellung von Kunststoffprofilen, vorzugsweise Kunststoffrohren, umfassend mindestens einen Extruder, ein Werkzeug, eine Kalibrierung sowie weitere Nachfolgeeinrichtungen.

Weiterhin betrifft die Erfindung ein Verfahren zum Erhöhen der Kühlleistung einer Extrusionslinie zum Extrudieren eines Kunststoffprofiles, insbesondere eines Kunststoffrohres, das die Schritte umfasst: a) Aufschmelzen von Kunststoff in einem Extruder, b) Formen eines Kunststoffstranges und Zuführen des Kunststoffstranges zu einem Werkzeug, c) Formen eines Kunststoffprofiles mittels des Werkzeuges, d) Kalibrieren und Aushärten mittels Kühlung des Profiles in einer Kalibrierung, wobei zusätzlich zur Außenkühlung in der Kalibrierung das Profil im Inneren gekühlt wird.

Aus dem Stand der Technik sind Möglichkeiten der Rohrinnenkühlung bekannt. So schlägt beispielsweise die DE 69 403 693 vor, die Innenwandung des Rohres mit einem Sprühnebel zu versehen und dadurch eine Verdampfung der Flüssigkeit an der Innenwandung des Rohres und damit eine Kühlung zu erreichen. Derartige Kühlungen haben sich jedoch nicht als praktisch erwiesen, da der heiße Wasserdampf in Extrusionsrichtung mitgeführt wird und so zwar in der Kalibrierung das Abkühlen des Rohres unterstützt, aber dann am Ende der Extrusionslinie, beispielsweise im Bereich der Säge, das Rohr auf einer Temperatur hält, so dass dieses zwar formstabil, jedoch für den Trennprozess zu weich ist.

Zur Herstellung von Rohren wird Kunststoff in einem Extruder aufgeschmolzen und durch ein entsprechendes Werkzeug gepresst. In einer anschließenden Kalibrierung wird der so erzeugte Außendurchmesser eingefroren und in Wassersprühbädern oder - vollbädern dem Kunststoff über die Außenoberfläche die Wärme entzogen. Dabei muss die gesamte Wärme durch die Kunststoffwand nach außen geleitet werden, wo sie dann vom Kühlwasser abgeleitet wird. Mit zunehmender Rohrwanddicke wird die Kühllänge überproportional länger, da der Kunststoff ein schlechter Wärmeleiter ist. Hinzu kommt, dass die Temperatur im Inneren des Rohres lange auf einem hohen Niveau bleibt und der Kunststoff ausreichend Zeit hat, aufgrund der Schwerkraft nach unten abzurinnen. Die Folge ist, dass die Rohrwanddicke im oberen Bereich immer kleiner als im unteren Bereich ist.

Dieser Prozess hat mit zunehmender Rohrwanddicke also zwei Nachteile. Die Kühllänge wird überproportional länger und der Kunststoff rinnt an der Innenwand ab, die Folge ist eine ungleiche Wanddickenverteilung. Um diese Nachteile zu verringern sind mehrere Systeme einer Rohrinnenkühlung wie aus der EP 795 389 bekannt. Diese Systeme sind in ihrer Wirkungsweise jedoch sehr eingeschränkt. Da das Rohr sowohl außen als auch innen gekühlt wird, wird sowohl die Außenkontur als auch die Innenkontur eingefroren. Wenn nun die Schmelze in der Mitte der Rohrwand durch Wärmeableitung nach außen und innen erstarrt, entstehen durch die starke Volumenreduzierung beim Übergang vom schmelzeförmigen in den festen Zustand Lunker. Diese Gefahr wird mit dicker werdenden Rohrwandstärken größer.

Aus der JP 56-005 750 A ist eine Vorrichtung zur Extrusion von Kunststoffprofilen bekannt, der plastifizierte Kunststoffmasse zuführbar ist und die mehrere Ringkanäle aufweist, die zu einem gemeinsamen Schmelzekanal vereinigt werden. Um diese Ringkanäle sind Kühlkanäle angeordnet.

Aus der DE 10 2005 031 747 A1 sind ein Verfahren zur Innenkühlung hohler Kunststoffprofile und ein Extruder zur Herstellung hohler Kunststoffprofile bekannt. Hierbei wird die Innenkühlung dadurch erreicht, dass in den Innenraum des Hohlprofiles ein Kühlgas geleitet wird, wobei das Kühlgas in einem Ranqueschen Wirbelrohr erzeugt wird.

Weiterhin sind aus dem Stand der Technik die WO 97/38844, in der ein Verfahren beschrieben wird, gemäß den Oberbegriffen der Ansprüche 1 und 8, bei dem ein Kunststoffartikel direkt erzeugt wird, die WO 2008/0641140 bei der ein Kältemittel zum Kühlen des Artikels verwendet wird und die WO 2006/050549, bei der durch zusätzliche Kühlkanäle im Werkzeug eine verstärkte Abkühlung der Schmelze erreicht wird, bekannt **Aufgabe** der vorliegenden Erfindung ist es, eine Extrusionslinie sowie ein Verfahren anzubieten, bei dem ein energieeffizienteres Extrudieren ermöglicht wird und die Wärme möglichst gleichmäßig über die gesamte Wanddicke des Rohres abgeführt werden kann, wobei in der Extrusionslinie die Kühlleistung erhöht ist, mit dem Ziel, den Ausstoß zu erhöhen bzw. die Kühlstrecke zu verkürzen, bzw. beim Verfahren die Kühlleistung erhöht und somit entweder der Ausstoß erhöht oder die Kühlstrecke verkürzt werden kann.

Die **Lösung** der Aufgaben ist in den Ansprüchen wiedergegeben.

Durch den Durchbruch wird es erreicht, dass eine Absaugung entgegen der Extrusionsrichtung ermöglicht wird und die im Inneren des Profils vorhandene Wärme dem Prozess entzogen werden kann. Je nach Beschaffenheit des Werkzeugs können auch mehrere Durchbrüche vorhanden sein.

Vorteilhafterweise wird die abgesaugte warme Luft zur Energierückgewinnung einem Verbraucher zugeführt.

Dieses Gegenstromprinzip hat den Vorteil, dass im Vergleich zur Rohrtemperatur am Ende der Extrusionsstrecke kältere Luft entgegen der Extrusionsrichtung durch das Rohrinnere gesaugt wird. Diese Luft wärmt sich auf dem Wege durch das Rohr an der Rohrinnenwand auf, wobei die Rohrtemperatur ebenfalls entgegen der Extrusionsrichtung zunimmt. Somit ist immer eine Temperaturdifferenz zwischen Luft und Rohrinnenwand gegeben, was einen permanenten Wärmefluss vom Rohr in die Luft zur Folge hat. Die so dem Prozess entzogene Wärme wird dem Prozess wieder zugeführt und trägt zur Energieoptimierung bei. Die Wärme wird somit sinnvoll genutzt und verpufft nicht in der Atmosphäre.

Prinzipiell ist auch das Blasen in Extrusionsrichtung möglich.

Der Durchbruch kann mittels eines durch das Werkzeug geführten Rohres gebildet werden. Damit eine Temperaturtrennung zwischen dem eigentlichen Werkzeug und dem Durchbruch, also dem eingelegten Rohr, entsteht, ist fortbildungsgemäß vorgesehen, dass zwischen dem Rohr und dem Werkzeug ein Luftspalt vorliegt. Je nach Beschaffenheit des Werkzeugs können auch mehrere Durchbrüche vorhanden sein.

Durch diesen Durchbruch wird es nun möglich, Luft im Gegenstromverfahren zu leiten. Dabei kommt es zum Wärmeaustausch zwischen der Luft und dem extrudierten Rohr, die dann im Inneren durch das Werkzeug hindurch abgesaugt wird. Idealerweise wird diese abgeführte Wärme zur Energierückgewinnung eingesetzt. Als Einsatzgebiet ist mehreres denkbar. Es kann z.B. das Kunststoffrohmaterial vorgewärmt oder ein Stirlingmotor angetrieben werden.

Die oben erwähnten Funktionsbereichen sind nicht zwingend als abgeschlossen Bereichen anzusehen, sie können fließend ineinander übergehen und somit sich auch überlappen.

Weiterbildungsgemäß ist vorgesehen, dass sich der Durchbruch auch im Extruder befindet, wobei die Absaugung in Extrusionsrichtung betrachtet vor dem Extruder angeordnet ist. Die weitere Erstreckung des Durchbruchs vom Werkzeug und im Extruder ermöglicht eine flexiblere Gestaltung der Absaugvorrichtung selbst, da die Absaugung im relativ freien Raum der Extrusionslinie angeordnet werden kann und nicht zwischen Extruder und Werkzeug platziert werden muss. Alternativ besteht die Möglichkeit, den Extruder quer zur Extrusionsrichtung anzuordnen und somit die Zuführung der Kunststoffschmelze ans Werkzeug seitlich auszuführen.

Vorteilhafter Weise ist der Volumenstrom regel- und/oder steuerbar. Es wird damit möglich, die Absaugvorrichtung an die jeweiligen Extrusionsbedingungen anzupassen. Die entsprechende Stärke des Absaugprozesses kann damit den jeweiligen Temperaturbedingungen und somit dem Kühlbedarf beim Prozess angepasst werden. Je mehr Kühlleistung benötigt wird, desto größer bzw. stärker ist der Volumenstrom einzustellen.

Als weitere Alternative bzw. Ergänzung wird vorgeschlagen, dass die Absaugung intermittierend betreibbar ist. Es wird also eine Zeitspanne t1 Luft abgesaugt, möglichst im turbulenten Bereich, gefolgt von einer Zeitspanne t2, wo nicht abgesaugt wird (Temperzeit). Die Wärme kann so wieder von der Mitte der Rohrwand an die Innenseite wandern, wodurch das Rohr an der Innenseite wieder wärmer wird. Im Anschluss folgt wieder eine Zeitspanne t1, in der die Wärme abgesaugt wird. Der gesamte Prozess kann mehrfach wiederholt werden.

Alternativ wird vorgeschlagen, dass im Anschluss an die Kalibrierung um das extrudierte Rohr eine Kammer angeordnet ist, wobei an der Kammer ein Ventilator angeordnet ist, mittels dem Luft entgegen der Extrusionsrichtung an der Außenwandung des extrudierten Rohres vorbei geführt werden kann.

Auch hier ist es von Vorteil, wenn die so erwärmte Luft zur Energierückgewinnung einem Verbraucher zugeführt wird.

Mit dem Ventilator kann entweder eine Absaugung oder ein Durchblasen der Luft entgegen der Extrusionsrichtung ermöglicht und dadurch die an der Außenwand des Profils vorhandene Wärme dem Prozess entzogen werden. Selbstverständlich kann der gesamte Prozess auch in Extrusionsrichtung betrieben werden.

Vorteilhafterweise ist die Kammer zumindest an einer Seite abgedichtet.

Als Verbraucher, dem die Wärme zugeführt wird, wird vorgeschlagen, eine Vorwärmstation für das dem Extruder zuzuführende Rohmaterial einzusetzen. Als Rohmaterial kommt in erster Linie Kunststoffgranulat zum Einsatz, sie kann aber auch zum Vorwärmen anderer Materialien wie z.B. PVC-Pulver eingesetzt werden. Dies hat den Vorteil, dass das Rohmaterial bereits eine höhere Temperatur als die Raumtemperatur aufweist und damit weniger Energie in Form von Heizenergie im Extruder aufgebracht werden muss. Dies gilt insbesondere auch für die eingebrachte mechanische Energie. Zum Beispiel bei einem Einschneckenextruder ist die Heizenergie, die über die Zylinderwand eingebracht wird, zum Aufschmelzen nicht so relevant, da hier vor allem die mechanische Energie (Antriebsenergie) in Reibungswärme umgewandelt wird.

Selbstverständlich darf die Temperatur nicht in einem Bereich liegen, bei dem das verwendete Kunststoffgranulat bereits verklebt. Dies lässt sich beispielsweise dadurch steuern, dass die Absaugvorrichtung im Volumenstrom steuer- und oder regelbar ist, aber auch dadurch, dass die zur Aufwärmung des Materials nicht benötigte Energie einem Wärmetauscher zugeführt wird und/oder zum Antrieb weiterer Aggregate, beispielsweise eines Stirlingmotors, und/oder zur Erzeugung von Prozesskälte Verwendung findet. Selbstverständlich kann natürlich die abgeführte Wärme auch nur ausschließlich für den Antrieb der Aggregate genutzt werden.

Für das Verfahren wird vorgeschlagen, dass zur inneren Kühlung des Profils die Luft entgegen der Extrusionsrichtung mittels einer Absaugung durchgesaugt wird und unterstützend der Kunststoffstrang im Werkzeug in mehrere Teilstränge aufgeteilt wird und so die Temperatur der Schmelze vor Austritt aus dem Werkzeug reduziert wird.

Um eine möglichst hohe Abkühlungsleistung mittels der Absaugvorrichtung im Inneren des Profils zu erreichen ist weiterbildungsgemäß vorgesehen, dass mittels der Absaugung mindestens eine Strömungsgeschwindigkeit erreicht wird, die sich im turbulenten Bereich befindet. Durch diese turbulente Strömung wird eine bestmögliche Verwirbelung der Luft im Inneren des Profiles erreicht, was zu einem hohen Austausch der Luft an der Innenwandung des Profiles führt und somit eine gute Kühlleistung nach sich zieht.

Die Temperatur kann somit um mindestens 10°C bis 50°C gesenkt werden, wobei vorgesehen ist, dass die Temperatur um mindestens 20°C bis 40°C, vorzugsweise um 30°C, gesenkt wird.

Es wird also die Temperatur der Kunststoffschmelze mindestens in den Übergangsbereich zwischen Schmelzezustand und teilkristallinem Zustand bei teilkristallinen Kunststoffen oder in den Übergangsbereich zwischen Schmelzezustand und Glaszustand bei amorphen Kunststoffen gesenkt, wobei darauf zu achten ist, dass die Temperatursenkung nur soweit erfolgt, dass eine Verschweißung zwischen den einzelnen Schichten sichergestellt ist.

Diese Temperatursenkung kann durch ein Gegenstromverfahren, bei dem die im Inneren des Rohres entstandene Wärme durch das Werkzeug hindurch abgesaugt wird, unterstützt werden.

Fortbildungsgemäß ist vorgesehen, dass die Kunststoffschmelze drei Funktionsbereichen durchströmt, wobei die drei Funktionsbereiche fließend in einander übergehen. Somit kann die Schmelze bzw. ein Schmelzeteilchen, sich einerseits noch im Verteilbereich aber auch schon im Kühlbereich befinden. Gleiches gilt für den Übergang zwischen Kühlbereich und Formgebungsbereich.

Das vorgeschlagene Verfahren und die erfindungsgemäße Vorrichtung eignen sich besonders zur Herstellung dickwandiger Rohre.

In einer weiteren Fortbildung ist verfahrenstechnisch vorgesehen, dass das Luftvolumen zwischen der Absaugung und dem Ende der Extrusionslinie mindestens 1mal, vorzugsweise 2mal pro Minute ausgetauscht wird. Es wird also vorgeschlagen, das Luftvolumen innerhalb des gesamten Rohrbereiches innerhalb der Extrusionslinie, also von der Absaugung über den Extruder bzw. dem Werkzeug entlang der Kalibrierung und dem Abzug oder weiteren Nachfolgeeinrichtungen bis zur Trennvorrichtung, an der der gesamte Profilstrang abgelängt wird, entsprechend oft auszutauschen, um eine optimale Kühlleistung zu erzielen.

In einer weiteren Fortbildung ist vorgesehen, die Absaugung intermittierend zu betreiben. Es wird also eine Zeitspanne t1 Luft abgesaugt, möglichst im turbulenten Bereich, gefolgt von einer Zeitspanne t2, wo nicht abgesaugt wird (Temperzeit). Die Wärme kann so wieder von der Mitte der Rohrwand an die Innenseite wandern, wodurch das Rohr an der Innenseite wieder wärmer wird. Im Anschluss folgt wieder eine Zeitspanne t1, in der die Wärme abgesaugt wird. Der gesamte Prozess kann mehrfach wiederholt werden, die Steuerung der intermittierenden Absaugung kann entweder temperatur-, zeit- oder volumenstromabhängig erfolgen.

Für eine derartige Ausführung ist es erforderlich, dass die Trennvorrichtung zumindest in dem Bereich der Wandstärke, in dem sie das Kunststoffrohr in Gänze ablängt, eine spanlose Trennung durchführt, damit es unterbunden wird, Späne mittels der Absaugung in Richtung des Werkzeuges zu saugen und diese Späne dann im Inneren des Rohres in dem Bereich, in dem das Rohr an der Oberfläche noch zu warm ist, anhaften können.

Die vorgeschlagene Extrusionslinie sowie das vorgeschlagene Verfahren eignen sich insbesondere für dickwandige Kunststoffrohre sowie Rohre mit großen bis sehr großen Durchmessern, deren Verweilzeit innerhalb der Extrusionslinie im Stundenbereich liegt, also relativ groß ist.

Mittels der vorgeschlagenen Erfindung wird bei einer Extrusionslinie die Kühlleistung erhöht, womit zwei erhebliche Vorteile verbunden sind. Einerseits wird die gesamte Kühllänge verkürzt, wenn man eine vorhandene Ausstoßleistung unverändert lässt, oder man kann die Ausstoßleistung erhöhen, sofern die gesamte Kühllänge beibehalten wird.

Ausstoß und Kühllänge stehen in einem physikalischen Zusammenhang mit der Kühlzeit. Die Kühlzeit ist abhängig von der Kühlleistung. Durch die Erhöhung der Kühlleistung und damit die Verringerung der Kühlzeit, kann, wie oben beschrieben, bei gleichbleibendem Ausstoß die Kühlstrecke verkürzt werden oder bei gleichbleibender Kühlstrecke der Ausstoß erhöht werden.

In der Regel wird eine Extrusionslinie für einen bestimmten Ausstoß angeboten. Bei konstantem Ausstoß ist die Extrusionslinie entsprechend dieser Erfindung dann kürzer als eine im Stand der Technik bekannte Linie (Beispiel A). Wenn umgekehrt zwei Extrusionslinien mit gleicher Länge verglichen werden, eine, die dem Stand der Technik entspricht und eine nach dieser Erfindung, so kann auf der erfindungsgemäßen Linie ein höherer Ausstoß erzielt werden (Beispiel B).

Vergleicht man gemäß Beispiel A zwei Linien mit gleich großem Extruder, dann würde die gemäß dem Stand der Technik entsprechende länger bauen als die Linie gemäß der vorliegenden Erfindung. Im Beispiel B werden zwei Linien mit gleicher Kühlstrecke verglichen, jene, die dem Stand der Technik entspricht, hat einen kleineren Extruder, jene, die der Erfindung entspricht, hat einen größeren Extruder.

Zur inneren Kühlung des Profils wird in diesem Verfahren die Luft entgegen der Extrusionsrichtung mittels einer Absaugung durchgesaugt.

Alternativ wird vorgeschlagen, zur äußeren Kühlung des Profils die Luft entgegen der Extrusionsrichtung mittels eines Ventilators durch eine Kammer an der Außenwandung des extrudierten Rohres vorbei zu führen.

Die Luft wird einem Verbraucher zur Nutzung der Wärme zugeführt. Als Verbraucher sind, wie bereits oben ausgeführt, die Vorwärmung von Granulat oder das Betreiben von Aggregaten ebenso wie die Zuführung an einen Wärmetauscher oder zur Erzeugung von Prozesskälte vorgesehen.

Wie bereits oben erwähnt, hat das Betreiben im Gegenstromprinzip den Vorteil, dass im Vergleich zur Rohrtemperatur am Ende der Extrusionsstrecke kältere Luft entgegen der Extrusionsrichtung durch das Rohrinnere durchgesaugt wird. Diese Luft wärmt sich auf dem Wege durch das Rohr an der Rohrinnenwand auf, wobei die Rohrtemperatur ebenfalls entgegen der Extrusionsrichtung zunimmt. Somit ist immer eine Temperaturdifferenz zwischen Luft und Rohrinnenwand gegeben, was einen permanenten Wärmefluss vom Rohr in die Luft zur Folge hat.

Um eine möglichst hohe Abkühlungsleistung zu erreichen, ist weiterbildungsgemäß vorgesehen, dass mindestens eine Strömungsgeschwindigkeit erreicht wird, die sich im turbulenten Bereich befindet. Durch diese turbulente Strömung wird eine bestmögliche Verwirbelung der Luft im Inneren und/oder an der Außenwandung des Profiles erreicht, was zu einem hohen Austausch der Luft an der Innen- und/oder Außenwandung des Profiles führt und somit eine gute Kühlleistung nach sich zieht.

Unterstützend ist fortbildungsgemäß vorgesehen, dass nicht nur die im Inneren des Rohres vorherrschende Wärme über die Luft teilweise abgesaugt und dem Verbraucher zugeführt wird, sondern auch die Luft am Umfang des Rohres, vorzugsweise entgegen der Extrusionsrichtung, am Rohr entlang geführt wird, welche sich wie bereits oben beschrieben erwärmt und dabei dem Rohr auch am Außendurchmesser Wärme entzieht und diese dem Verbraucher zuführt.

Die Verfahren sind besonders sinnvoll beim Extrudieren eines dickwandigen Kunststoffrohres, da hier relativ lange Verweilzeiten des Extrudates in der Linie erforderlich sind und somit das Luftvolumen mehrfach ausgetauscht werden kann, was eine besonders hohe Effektivität zur Folge hat.

Es wird also vorgeschlagen, dass im oder am extrudierten Rohr anfallende Wärme dem Extrusionsprozess wieder zugeführt wird, indem Luft entlang der Oberfläche des extrudierten Rohres entgegen der Extrusionsrichtung geführt wird und wobei die gewonnene Wärmemenge zur Vorwärmung des zum Extrusionsprozess benötigten Kunststoffgranulates oder zum Antrieb von Aggregaten wie einem Stirlingmotor bzw. zur Erzeugung von Prozesskälte genutzt wird.

Die vorgeschlagenen Extrusionslinien sowie die vorgeschlagenen Verfahren eignen sich insbesondere für dickwandige Kunststoffrohre sowie Rohre mit großen bis sehr großen Durchmessern, deren Verweilzeit innerhalb der Extrusionslinie im Stundenbereich liegt, also relativ groß ist.

Mittels der vorgeschlagenen Erfindung wird bei einer Extrusionslinie die Kühlleistung erhöht, womit erhebliche Vorteile verbunden sind. Einerseits wird die gesamte Kühllänge verkürzt, wenn man eine vorhandene Ausstoßleistung unverändert lässt, oder man kann die Ausstoßleistung erhöhen, sofern die gesamte Kühllänge beibehalten wird. Weiterhin wird damit ein energieeffizientes Extrudieren eines Kunststoffprofils erreicht, da die dem Profil entzogene Energie mindestens teilweise dem Prozess wieder zugeführt wird.

Die abgesaugte Luft beeinflusst das Aufschmelzverhalten im Extruder nicht, da sie mit dem Extruder nicht in Berührung kommt. Bei im Stand der Technik bekannten Lösungen wird die Luft durch den Extruder gesaugt und Maßnahmen ergriffen, dass es keine Beeinflussung gibt. Durch die vorgeschlagene turbulente Strömung wird eine besonders effektive Kühlung erzielt.

In Erweiterung der inneren Luftabsaugung ist vorgesehen, auch oder alternativ außen über das Rohr Luft vorzugsweise, aber nicht ausschließlich, im Gegenstrom zu führen. Der Vorteil besteht darin, dass eine weit größere Wärmemenge dem Rohr entzogen werden kann, welche teils wieder verwertbar sein kann. Die Luftkühlung am Rohraußendurchmesser kann auch allein eingesetzt werden.

Im Stand der Technik ist eine Kühlung mit Wasservolltanks oder Wassersprühtanks bekannt. Insbesondere bei bestehenden Anlagen kann die Außenluftkühlung eine wirkungsvolle Nachrüstung sein, auch wenn die Rohrinnenkühlung wegen fehlendem Durchbruch im Rohrkopf nicht möglich ist.

Ziel ist es, einen möglichst hohen Prozentsatz der anfallenden Wärme im System zu halten, nicht nur über Vorwärmung, sondern auch z.B. über Umwandlung in mechanische Antriebsenergie.

Im Werkzeug ist die formgebende Düse am Umfang in einzelne Segmente aufgeteilt, wobei jedes Segment sowohl über eine Heizeinrichtung wie auch eine Kühleinrichtung verfügt.

Durch diese Ausgestaltung wird es nun möglich, das Werkzeug gezielt zu temperieren, denn es kann nicht nur, wie im Stand der Technik ein Heizen, sondern auch ein Kühlen erfolgen.

Weiterbildungsgemäß ist vorgesehen, dass nicht nur die formgebende Düse, sondern zusätzlich auch der formgebende Dorn in einzelne Segmente aufgeteilt ist, die über eine Heiz- und eine Kühleinrichtung verfügen.

Dies ermöglicht eine bessere Beeinflussbarkeit der Wanddickenverteilung. Die Temperatur ist fortbildungsgemäß in jedem einzelnen Segment sowohl in der formgebenden Düse als auch im formgebenden Dorn steuer- oder regelbar.

Den einzelnen Segmenten werden unterschiedliche Temperaturen zugeordnet, wobei jedes Segment sowohl geheizt als auch gekühlt werden kann.

Die Wirkung der thermischen Zentrierung wird entscheidend verbessert, wenn die einzelnen Segmente eben nicht nur beheizt, sondern auch gekühlt werden. Damit kann eine Zonentemperatur erreicht werden, die deutlich unter der Massetemperatur liegt. Damit ist es möglich, einen entscheidenden Einfluss auf das Strömungsverhalten zu nehmen, um damit segmentweise die Wanddicke zu verändern. Die Wirkung wird zusätzlich erhöht, wenn, wie oben gesagt, nicht nur die Düse segmentweise beheizt und gekühlt werden kann, sondern auch der Dorn.

In den Zeichnungen sind zwei Ausführungsbeispiele der Erfindung schematisch dargestellt, es zeigt
- Fig. 1: eine Extrusionslinie,
- Fig. 2: einen Schnitt durch das Werkzeug,
- Fig. 3: den Gegenstand gemäß Figur 2 in einer alternativen Ausführung,
- Fig. 4: die einzelnen Temperaturbereiche,
- Fig. 5: eine Außenkühlung des Profils,
- Fig. 6: eine Alternative zu Figur 5,
- Fig. 7: das Werkzeug mit den Segmenten und
- Fig. 8: das Werkzeug nach Figur 7 in einem Schnitt parallel zur Extrusionsrichtung.

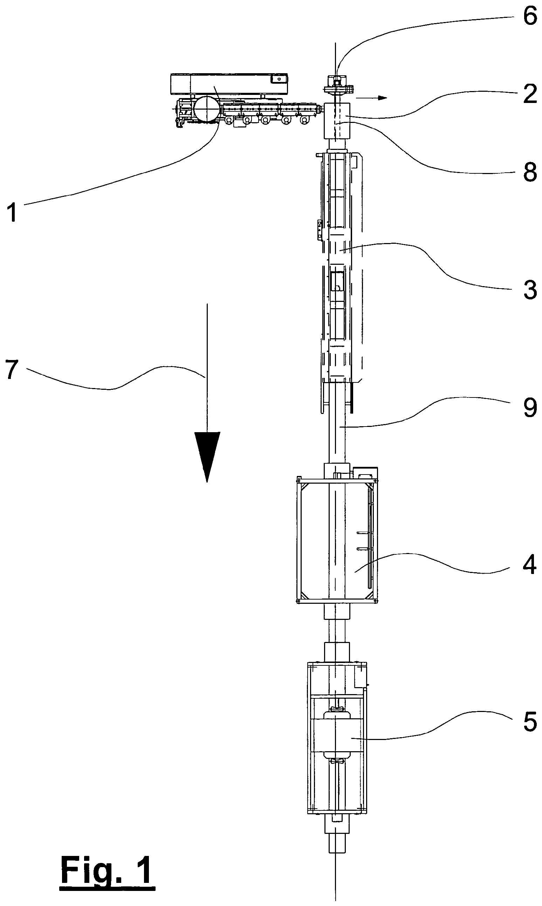

In Figur 1 ist schematisch eine Extrusionslinie dargestellt, wobei der Extruder 1 seitlich am Extrusionswerkzeug 2 angeordnet ist. In Extrusionsrichtung 7 betrachtet schließt sich ans Werkzeug 2 die Kalibrierung 3 an, der wiederum der Abzug 4 folgt. Die Kalibrierung 3 umfasst einen Vakuumtank mit eingebauter Kalibrierhülse. An die Kalibrierung können sich auch noch weitere Kühlbäder anschließen.

Eine weitere Nachfolgeeinrichtung, hier eine Trennvorrichtung in Form von einer Säge 5, schließt sich an. In der beispielhaft dargestellten Extrusionslinie wird ein Rohr 9 gefertigt. Die Absaugung 6 ist am Anfang der Extrusionslinie direkt am Werkzeug angeordnet. Die entsprechende Absaugrichtung ist durch den Pfeil schematisch angezeigt.

Das Werkzeug 2 weist einen Durchbruch 8 auf, der Durchbruch 8 steht mit der Absaugung 6 in Verbindung, so dass die Absaugung 6 das Luftvolumen im Inneren des Rohres 9 bis zum Ende der Extrusionslinie im Bereich der Trennvorrichtung 5 durchsaugen kann.

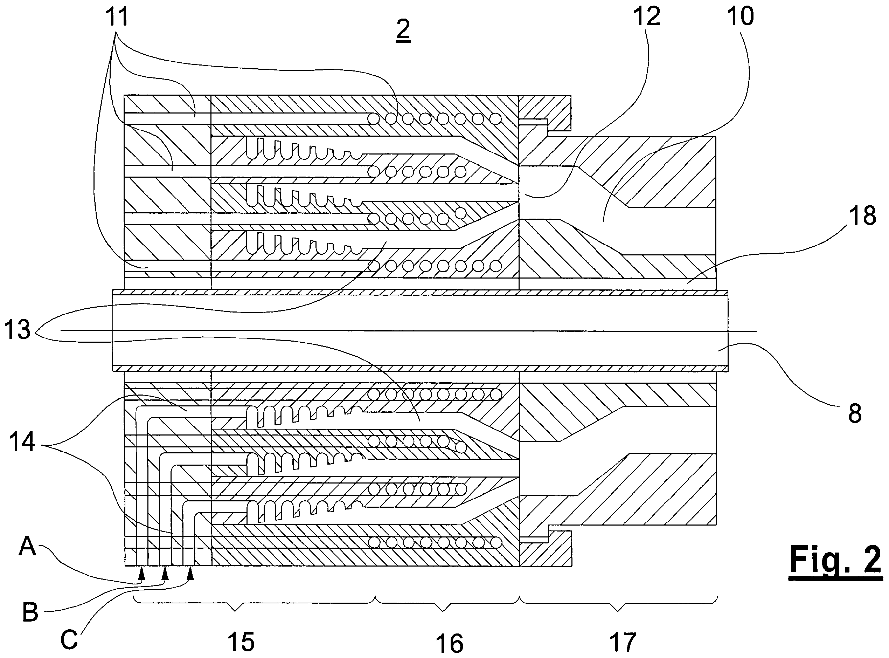

In Figur 2 ist ein erfindungsgemäßes Werkzeug 2 dargestellt. Der eigentliche Schmelzekanal 10, mittels dem das Kunststoffprofil extrudiert wird, bildet den Schlussteil eines Gesamtwerkzeuges. Der Mittelteil des Werkzeuges 2 besteht aus mehreren Ringkanälen 13, die sich an einer Zusammenfließstelle 12 vereinigen und den Beginn des gemeinsamen Schmelzekanals 10 bilden. Die einzelnen Ringkanäle 13, die mit Zuführkanälen 14 in Verbindung stehen, werden mit plastifizierter Kunststoffmasse aus dem in dieser Figur nicht dargestellten Extruder 1 versorgt. Zwischen den Ringkanälen 13 sind Kühlkanäle 11 angeordnet, die mit einem ebenfalls nicht dargestellten Kühlkreislauf in Verbindung stehen. Die Kühlkanäle sind so angeordnet, dass sie der vorhandenen Materialmasse des Werkzeuges möglichst gleichmäßig Wärme entziehen können. Das Werkzeug teilt sich somit in die drei Funktionsbereiche Verteilbereich 15, an den die Schmelze aus dem oder den Extrudern an den Stellen A, B, C den Zuführkanälen 14 zugeführt wird, und auf die Ringkanäle 13 aufgeteilt wird, Kühlbereich 16, in dem die Ringkanäle 13 mit Kühlkanälen 11 versehen sind, und den Formgebungsbereich 18, in dem die vorgekühlte Schmelze zusammenfließt, auf. Um die Wärme aus dem Inneren des Rohres abzuführen, ist im Werkzeug 2 ein Durchbruch 8 mittels eines Rohres vorgesehen. Zwischen dem Rohr 8 und dem eigentlichen Werkzeug 2 ist zur Temperaturtrennung ein Luftspalt 18 vorgesehen.

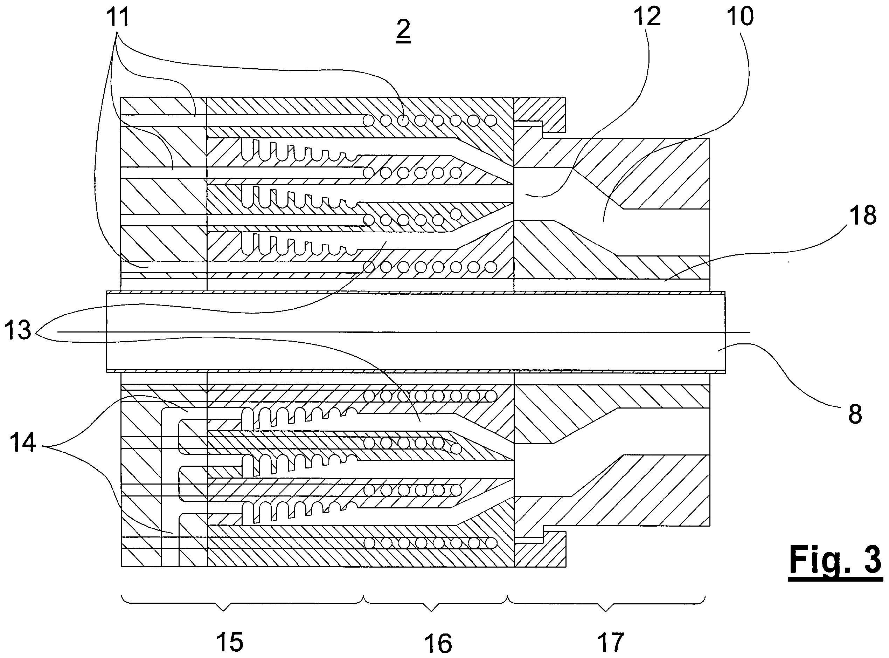

In Figur 3 ist eine alternative Ausführung der Erfindung dargestellt. Sie unterscheidet sich zur Ausführung gem. Figur 2 dadurch, dass die Zuführung der Schmelze zentral, also nur über einen Extruder erfolgt. Es ist somit ein Schnitt durch das Werkzeug 2 dargestellt, in dem wieder der eigentliche Schmelzekanal 10 zu sehen ist, mittels dem das Kunststoffprofil extrudiert wird. Es bildet auch hier den Schlussteil eines Gesamtwerkzeuges. Auch hier besteht der Mittelteil des Werkzeuges 2 aus mehreren Ringkanälen 13, die sich an der Zusammenfließstelle 12 vereinigen und den Beginn des gemeinsamen Schmelzekanals 10 bilden. Die einzelnen Ringkanäle 13 stehen mit den Zuführkanälen 14 in Verbindung. Deutlich ist zu erkennen, dass die Zuführkanäle 14 von einem nicht dargestellten Extruder 1 zentrisch angeströmt werden und dann auf die drei Wendelverteiler aufgeteilt werden. Auch hier sind zwischen den Ringkanälen 13 Kühlkanäle 11 angeordnet, die mit einem ebenfalls nicht dargestellten Kühlkreislauf in Verbindung stehen. Selbstverständlich sind die Kühlkanäle wieder so angeordnet, dass sie der vorhandenen Materialmasse des Werkzeuges möglichst gleichmäßig Wärme entziehen können. Auch hier teilt sich das Werkzeug 2 in die drei Funktionsbereiche Verteilbereich 15, Kühlbereich 16 und Formgebungsbereich 18 auf. Auch in dieser Ausführungsform ist zur Abführung der Wärme aus dem Inneren des Rohres, im Werkzeug 2 ein Durchbruch 8 mittels eines Rohres vorgesehen. Zwischen dem Rohr 8 und dem eigentlichen Werkzeug 2 ist wieder zur Temperaturtrennung ein Luftspalt 18 vorgesehen.

Es sei angemerkt, dass sowohl gem. der Ausführung nach Figur 2 als auch gem. Ausführung nach Figur 3 jeder Ringkanal 13 mit ein und derselben Kunststoffmasse oder aber auch mit unterschiedlichen Kunststoffmassen beaufschlagt werden kann. Hierzu ist lediglich der Zuführkanal 14 zu modifizieren, so dass jeder Zuführkanal beispielsweise einem eigenen Extruder 1 zugeordnet ist. Es können somit beispielsweise unterschiedliche Farbschichten im Rohr erzeugt werden oder auch zwei Materialien mit unterschiedlichen Eigenschaften gefertigt werden. Es ist somit beispielsweise möglich, den mittleren Teil mit einem Recyclat zu beaufschlagen, welches dann im Fertigteil von beiden Seiten mit hochwertigerem Material umschlossen ist.

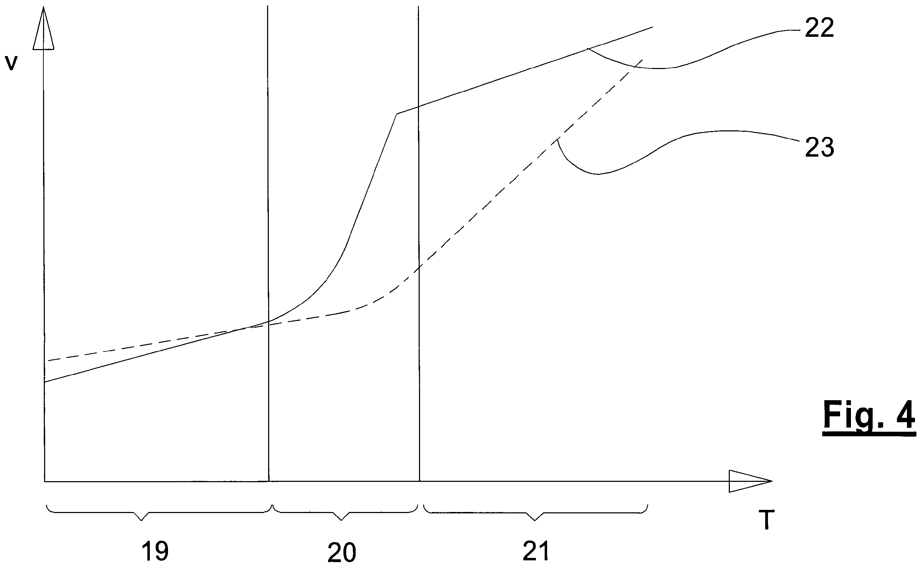

Figur 4 zeigt schematisch einen Kurvenverlauf eines teilkristallinen sowie eines amorphen Kunststoffes, wobei das spezifische Volumen v über der Temperatur T dargestellt ist. Die dargestellte Volllinie 22 steht beispielhaft für den teilkristallinen Werkstoff und die gestrichelte Linie 23 für einen amorphen Kunststoff. Beim Abkühlen soll also sichergestellt werden, dass die Temperatur von dem Schmelzezustand, dargestellt in dem Bereich 21, mindestens in den Übergangsbereich 20 abgekühlt wird, aber die Abkühlung nicht so stark erfolgt, dass der Feststoffbereich 19 erreicht wird. Im Feststoffbereich 19 herrscht bei teilkristallinen Kunststoffen ein teilkristalliner Zustand und bei amorphen Kunststoffen ein Glaszustand vor.

An die Absaugung 6 angeordnet ist ein Verbraucher 24, der hier beispielhaft eine Vorwärmstation für das dem Extruder 1 zuzuführende Kunststoffgranulat ist. Es kann aber genauso ein Stirlingmotor damit betrieben werden, der wiederum den Abzug 4 oder sonstige Antriebe der Extrusionslinie ansteuert.

Die Absaugung ist intermittierend betreibbar. Es wird also eine Zeitspanne t1 Luft abgesaugt, möglichst im turbulenten Bereich, gefolgt von einer Zeitspanne t2, wo nicht abgesaugt wird (Temperzeit). Die Wärme kann so wieder von der Mitte der Rohrwand an die Innenseite wandern, wodurch das Rohr an der Innenseite wieder wärmer wird. Im Anschluss folgt wieder eine Zeitspanne t1, in der die Wärme abgesaugt wird. Der gesamte Prozess kann mehrfach wiederholt werden. Analoges gilt für die Luftströmung entlang der Außenwandung des Profils bei der Außenkühlung.

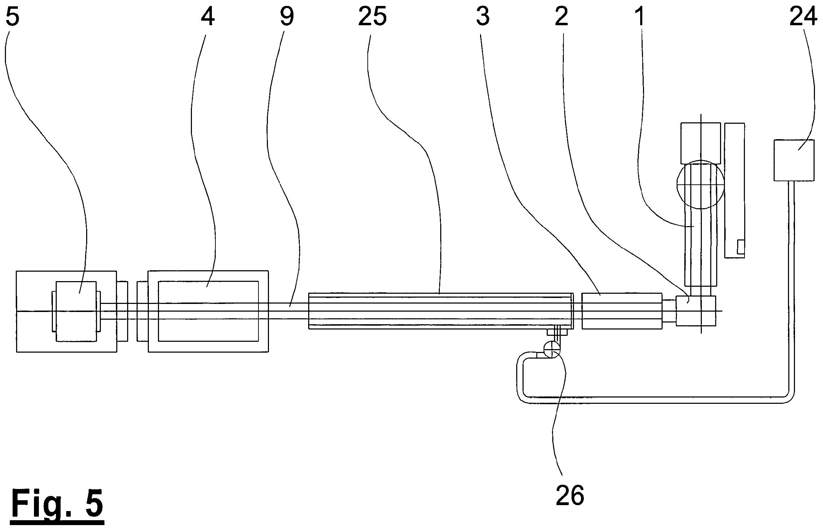

Figur 5 zeigt schematisch eine Außenkühlung der in Figur 1 beispielhaft dargestellten Extrusionslinie, die wiederum aus dem Extruder 1, dem Werkzeug 2, einer Kalibrierung 3, dem Abzug 4 und einer Trennvorrichtung 5 besteht. Zwischen der Kalibrierung 3 und dem Abzug 4 ist um das extrudierte Rohr 9 eine Kammer angeordnet, die wiederum mit einem Ventilator 26 verbunden ist. Die Kammer ist sinnvoller Weise in Richtung zu der Kalibrierung 3 abgedichtet, so dass mittels des Ventilators 26 eine Absaugung entgegen der Extrusionsrichtung vollzogen werden kann. Die im Raum befindliche Luft wird also am Ende der Kammer, sprich gegenüber dem Abzug 4, angesaugt, entlang der Oberfläche des Rohres 9 entgegen der Extrusionsrichtung zum Ausgang der Kammer 25, also dort, wo der Ventilator 26 angeordnet ist, durchgesaugt und auf dieser Strecke erwärmt und gleichzeitig die Außenwand des Rohres 9 abgekühlt. Die so erwärmte Luft wird über die Verbindungsrohre dem Verbraucher 24 zugeführt.

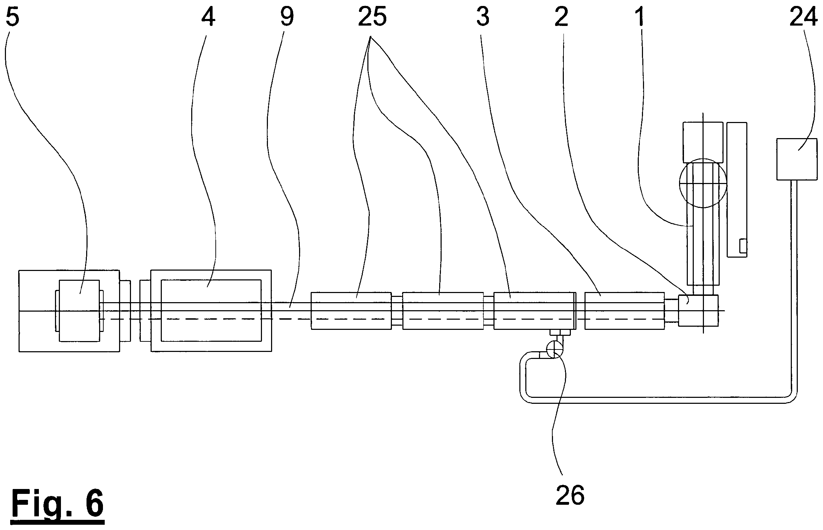

Figur 6 zeigt eine ähnliche Ausführungsform, in der wiederum eine Extrusionslinie mit einem Extruder 1, einem Extrusionswerkzeug 2, der Kalibrierung 3, dem Abzug 4 und einer Trennvorrichtung 5 dargestellt ist. Wie bereits zu Figur 1 beschrieben können sich an die Kalibrierung weitere Kühlbäder anordnen. Dies ist hier in Figur 3 beispielhaft über drei Kühlbäder dargestellt. Diese Kühlbäder sind so angeordnet, dass zwischen diesen eine Verbindung besteht und wiederum am ersten Kühlbad nach der Kalibrierung 3 in Extrusionsrichtung betrachtet, ein Ventilator 26 angeordnet ist. Jedes dieser Kühlbäder ist so ausgeführt, dass wiederum um das Rohr 9 eine Kammer 25 entsteht. Wie bereits bei Figur 5 beschrieben kann nun über den Ventilator 26 auf der Stirnfläche der Kammer 25, die dem Abzug 4 gegenüber liegt, die Raumluft angesaugt werden und entgegen der Extrusionsrichtung entlang der Oberfläche des Rohres 9 Richtung Ventilator 26 durchgesaugt werden. Auch hier erwärmt sich die Luft auf diesem Weg und wird über die Verbindungsrohre dem Verbraucher 24 zugeführt.

Diese vorgeschlagene Ausführungsform ist beispielsweise bei bestehenden Rohrextrusionslinien denkbar, in denen die vorhandenen Kühlbäder durch leichte Modifikation zu derartigen Kammern umfunktioniert werden können und die vorhandenen Kühlanschlüsse mit dem Ventilator 26 verbunden werden können. Selbstverständlich ist es auch hier denkbar, die Rohrverbindung zum Verbraucher 24 genau an der anderen Seite der Kammern 25, also kurz vor dem Abzug 4, anzuordnen und dann die Luft nicht durchzusaugen, sondern durchzublasen. Das würde bedeuten, dass dann in dem Ausführungsbeispiel gemäß Figur 5 bzw. 6 der Ventilator 26 die Raumluft ansaugt und durch die Kammern entlang der Oberfläche des Rohres 9 bläst, wo sie am anderen Ende den Verbindungsrohren zugeführt und an den Verbraucher 24 weitergeleitet wird.

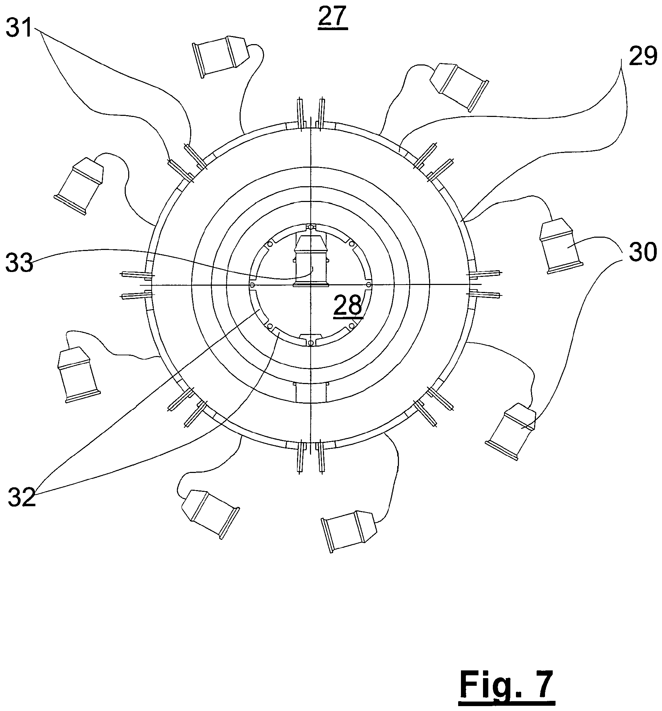

Figur 7 zeigt den formgebenden Teil des Werkzeuges im Einzelnen. Es ist eine Ansicht auf das Werkzeug entlang der Extrusionsrichtung 7, also auf den Dorn 28 bzw. die Düse 27 gesehen. Die Düse 27 ist am Umfang in mehrere Segmente 10 aufgeteilt, die sowohl über eine Heizeinrichtung 30 als auch über eine Kühleinrichtung 31 verfügen. Diese Heiz- 30 und auch Kühleinrichtung 31 sind so steuer- oder regelbar, dass jedes der Segmente 10 mit unterschiedlichen Temperaturen beaufschlagt werden kann. Durch diese unterschiedlichen Temperaturen wird es möglich, die Wandstärke des Rohres zu vergleichmäßigen.

Das Ganze wird dadurch unterstützt, dass es erfindungsgemäß vorgesehen ist, nicht nur die formgebende Düse 27, sondern auch den formgebenden Dorn 29 am Umfang in Segmente 13 aufzuteilen. Auch diese Segmente 13 verfügen über eine Heizeinrichtung 33 und eine Kühleinrichtung 34, wie es in Figur 3 zu erkennen ist.

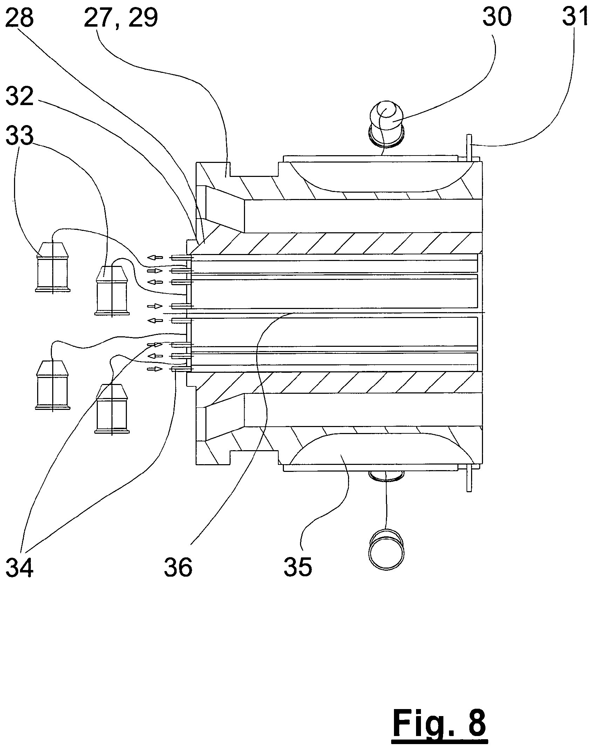

Figur 8 zeigt wieder den formgebenden Teil des Werkzeuges und ist eine Darstellung in einem Schnitt durch das Werkzeug, wobei der Schnitt durch die Extrusionsachse 36 verläuft.

Um eine thermische Trennung zwischen den Segmenten 10 zu erhalten, ist jedes Segment partiell ausgespart, so dass eine Art Schlitz entsteht, wie es in der Schnittdarstellung der Figur 8 zu erkennen ist. Dieser Schlitz ist als Position 16 unter Bezug genommen.

Es ist aber z.B. genauso möglich jede der Zonen mit einem Heiz-/ Kühlkreislauf zu betreiben. Es wird also mit Flüssigkeit temperiert und somit ist keine Trennung mit unterschiedlichen Aggregaten zwischen Heizen und Kühlen erforderlich.

Mit dem vorgeschlagenen Verfahren und der vorgeschlagenen Vorrichtung ist es damit vereinfacht möglich, gleichmäßig Wärme über die gesamte Wanddicke des Rohres abzuführen.

### Bezugszeichenliste:

| | | | |
|---|---|---|---|
| 1 | Extruder | 21 | Schmelzezustand |
| 2 | Werkzeug | 22 | Kurve teilkristalliner Kunststoff |
| 3 | Kalibrierung | 23 | Kurve amorpher Kunststoff |
| 4 | Abzug | 24 | Verbraucher |
| 5 | Trennvorrichtung | 25 | Kammer |
| 6 | Absaugung | 26 | Ventilator |
| 7 | Extrusionsrichtung | 27 | Düse |
| 8 | Durchbruch | 28 | Dorn |
| 9 | Kunststoffprofil | 29 | Segment von 27 |
| 10 | Schmelzekanal | 30 | Heizeinrichtung von 29 |
| 11 | Kühlkanal | 31 | Kühleinrichtung von 29 |
| 12 | Zusammenfließstelle | 32 | Segment von 28 |
| 13 | Ringkanal | 33 | Heizeinrichtung von 22 |
| 14 | Zuführkanal zu 13 | 34 | Kühleinrichtung von 22 |
| 15 | Verteilerbereich von 2 | 35 | Schlitz in 29 |
| 16 | Kühlbereich von 2 | 36 | Extrusionsachse |
| 17 | Formgebungsbereich von 2 | | |
| 18 | Luftspalt | v | spezifisches Volumen |
| 19 | Feststoffbereich | T | Temperatur |
| 20 | Übergangsbereich | | |

Figur 4 zeigt schematisch einen Kurvenverlauf eines teilkristallinen sowie eines amorphen Kunststoffes, wobei das spezifische Volumen v über der Temperatur T dargestellt ist. Die dargestellte Volllinie 22 steht beispielhaft für den teilkristallinen Werkstoff und die gestrichelte Linie 23 für einen amorphen Kunststoff. Beim Abkühlen soll also sichergestellt werden, dass die Temperatur von dem Schmelzezustand, dargestellt in dem Bereich 21, mindestens in den Übergangsbereich 20 abgekühlt wird, aber die Abkühlung nicht so stark erfolgt, dass der Feststoffbereich 19 erreicht wird. Im Feststoffbereich 19 herrscht bei teilkristallinen Kunststoffen ein teilkristalliner Zustand und bei amorphen Kunststoffen ein Glaszustand vor.

An die Absaugung 6 angeordnet ist ein Verbraucher 24, der hier beispielhaft eine Vorwärmstation für das dem Extruder 1 zuzuführende Kunststoffgranulat ist. Es kann aber genauso ein Stirlingmotor damit betrieben werden, der wiederum den Abzug 4 oder sonstige Antriebe der Extrusionslinie ansteuert.

Die Absaugung ist intermittierend betreibbar. Es wird also eine Zeitspanne t1 Luft abgesaugt, möglichst im turbulenten Bereich, gefolgt von einer Zeitspanne t2, wo nicht abgesaugt wird (Temperzeit). Die Wärme kann so wieder von der Mitte der Rohrwand an die Innenseite wandern, wodurch das Rohr an der Innenseite wieder wärmer wird. Im Anschluss folgt wieder eine Zeitspanne t1, in der die Wärme abgesaugt wird. Der gesamte Prozess kann mehrfach wiederholt werden. Analoges gilt für die Luftströmung entlang der Außenwandung des Profils bei der Außenkühlung.

Figur 5 zeigt schematisch eine Außenkühlung der in Figur 1 beispielhaft dargestellten Extrusionslinie, die wiederum aus dem Extruder 1, dem Werkzeug 2, einer Kalibrierung 3, dem Abzug 4 und einer Trennvorrichtung 5 besteht. Zwischen der Kalibrierung 3 und dem Abzug 4 ist um das extrudierte Rohr 9 eine Kammer angeordnet, die wiederum mit einem Ventilator 26 verbunden ist. Die Kammer ist sinnvoller Weise in Richtung zu der Kalibrierung 3 abgedichtet, so dass mittels des Ventilators 26 eine Absaugung entgegen der Extrusionsrichtung vollzogen werden kann. Die im Raum befindliche Luft wird also am Ende der Kammer, sprich gegenüber dem Abzug 4, angesaugt, entlang der Oberfläche des Rohres 9 entgegen der Extrusionsrichtung zum Ausgang der Kammer 25, also dort, wo der Ventilator 26 angeordnet ist, durchgesaugt und auf dieser Strecke erwärmt und gleichzeitig die Außenwand des Rohres 9 abgekühlt. Die so erwärmte Luft wird über die Verbindungsrohre dem Verbraucher 24 zugeführt.

Figur 6 zeigt eine ähnliche Ausführungsform, in der wiederum eine Extrusionslinie mit einem Extruder 1, einem Extrusionswerkzeug 2, der Kalibrierung 3, dem Abzug 4 und einer Trennvorrichtung 5 dargestellt ist. Wie bereits zu Figur 1 beschrieben können sich an die Kalibrierung weitere Kühlbäder anordnen. Dies ist hier in Figur 3 beispielhaft über drei Kühlbäder dargestellt. Diese Kühlbäder sind so angeordnet, dass zwischen diesen eine Verbindung besteht und wiederum am ersten Kühlbad nach der Kalibrierung 3 in Extrusionsrichtung betrachtet, ein Ventilator 26 angeordnet ist. Jedes dieser Kühlbäder ist so ausgeführt, dass wiederum um das Rohr 9 eine Kammer 25 entsteht. Wie bereits bei Figur 5 beschrieben kann nun über den Ventilator 26 auf der Stirnfläche der Kammer 25, die dem Abzug 4 gegenüber liegt, die Raumluft angesaugt werden und entgegen der Extrusionsrichtung entlang der Oberfläche des Rohres 9 Richtung Ventilator 26 durchgesaugt werden. Auch hier erwärmt sich die Luft auf diesem Weg und wird über die Verbindungsrohre dem Verbraucher 24 zugeführt.

Diese vorgeschlagene Ausführungsform ist beispielsweise bei bestehenden Rohrextrusionslinien denkbar, in denen die vorhandenen Kühlbäder durch leichte Modifikation zu derartigen Kammern umfunktioniert werden können und die vorhandenen Kühlanschlüsse mit dem Ventilator 26 verbunden werden können. Selbstverständlich ist es auch hier denkbar, die Rohrverbindung zum Verbraucher 24 genau an der anderen Seite der Kammern 25, also kurz vor dem Abzug 4, anzuordnen und dann die Luft nicht durchzusaugen, sondern durchzublasen. Das würde bedeuten, dass dann in dem Ausführungsbeispiel gemäß Figur 5 bzw. 6 der Ventilator 26 die Raumluft ansaugt und durch die Kammern entlang der Oberfläche des Rohres 9 bläst, wo sie am anderen Ende den Verbindungsrohren zugeführt und an den Verbraucher 24 weitergeleitet wird.

Figur 7 zeigt den formgebenden Teil des Werkzeuges im Einzelnen. Es ist eine Ansicht auf das Werkzeug entlang der Extrusionsrichtung 7, also auf den Dorn 28 bzw. die Düse 27 gesehen. Die Düse 27 ist am Umfang in mehrere Segmente 10 aufgeteilt, die sowohl über eine Heizeinrichtung 30 als auch über eine Kühleinrichtung 31 verfügen. Diese Heiz- 30 und auch Kühleinrichtung 31 sind so Steuer- oder regelbar, dass jedes der Segmente 10 mit unterschiedlichen Temperaturen beaufschlagt werden kann. Durch diese unterschiedlichen Temperaturen wird es möglich, die Wandstärke des Rohres zu vergleichmäßigen.

Das Ganze wird dadurch unterstützt, dass es erfindungsgemäß vorgesehen ist, nicht nur die formgebende Düse 27, sondern auch den formgebenden Dorn 29 am Umfang in Segmente 13 aufzuteilen. Auch diese Segmente 13 verfügen über eine Heizeinrichtung 33 und eine Kühleinrichtung 34, wie es in Figur 3 zu erkennen ist.

Figur 8 zeigt wieder den formgebenden Teil des Werkzeuges und ist eine Darstellung in einem Schnitt durch das Werkzeug, wobei der Schnitt durch die Extrusionsachse 36 verläuft.

Um eine thermische Trennung zwischen den Segmenten 10 zu erhalten, ist jedes Segment partiell ausgespart, so dass eine Art Schlitz entsteht, wie es in der Schnittdarstellung der Figur 8 zu erkennen ist. Dieser Schlitz ist als Position 16 unter Bezug genommen.

Es ist aber z.B. genauso möglich jede der Zonen mit einem Heiz-/ Kühlkreislauf zu betreiben. Es wird also mit Flüssigkeit temperiert und somit ist keine Trennung mit unterschiedlichen Aggregaten zwischen Heizen und Kühlen erforderlich.

Mit dem vorgeschlagenen Verfahren und der vorgeschlagenen Vorrichtung ist es damit vereinfacht möglich, gleichmäßig Wärme über die gesamte Wanddicke des Rohres abzuführen.

### Bezugszeichenliste:

- 1: Extruder
- 2: Werkzeug
- 3: Kalibrierung
- 4: Abzug
- 5: Trennvorrichtung
- 6: Absaugung
- 7: Extrusionsrichtung
- 8: Durchbruch
- 9: Kunststoffprofil
- 10: Schmelzekanal
- 11: Kühlkanal
- 12: Zusammenfließstelle
- 13: Ringkanal
- 14: Zuführkanal zu 13
- 15: Verteilerbereich von 2
- 16: Kühlbereich von 2
- 17: Formgebungsbereich von 2
- 18: Luftspalt
- 19: Feststoffbereich
- 20: Übergangsbereich
- 21: Schmelzezustand
- 22: Kurve teilkristalliner Kunststoff
- 23: Kurve amorpher Kunststoff
- 24: Verbraucher
- 25: Kammer
- 26: Ventilator
- 27: Düse
- 28: Dorn
- 29: Segment von 27
- 30: Heizeinrichtung von 29
- 31: Kühleinrichtung von 29
- 32: Segment von 28
- 33: Heizeinrichtung von 22
- 34: Kühleinrichtung von 22
- 35: Schlitz in 29
- 36: Extrusionsachse

- v: spezifisches Volumen
- T: Temperatur

## Patentansprüche

1. Extrusionslinie zur Herstellung von Kunststoffprofilen, vorzugsweise Kunststoffrohren, umfassend mindestens
einen Extruder (1),
ein Werkzeug (2),
eine Kalibrierung (3)
sowie weitere Nachfolgeeinrichtungen (4, 5),
mindestens das Werkzeug (2) mindestens einen Durchbruch (8) aufweist und in Extrusionsrichtung (7) gesehen vor dem Werkzeug (2) eine Absaugung (6) angeordnet ist, mittels der Luft im Inneren des Kunststoffprofils (9) austauschbar ist,
wobei das Werkzeug (2) aus mehreren Funktionsbereichen mit getrennten Schmelzekanälen besteht, mittels denen die Kunststoffschmelze in Teilschmelzen aufteilbar und die Temperatur der Schmelze reduzierbar ist, **dadurch gekennzeichnet, dass** im Anschluss an die Kalibrierung (3) um das extrudierte Rohr eine Kammer (25) angeordnet ist,
wobei an der Kammer (25) ein Ventilator (26) angeordnet ist, mittels dem Luft entgegen der Extrusionsrichtung (7) an der Außenwandung des extrudierten Rohres vorbei geführt werden kann,
wobei das Werkzeug (2) mindestens eine formgebende Düse (27) und einen formgebenden Dorn (28), umfasst und
die formgebende Düse (27) am Umfang in einzelne Segmente (10) aufgeteilt ist, wobei jedes Segment (10) sowohl über eine Heizeinrichtung (30) wie auch eine Kühleinrichtung (31) verfügt.

2. Extrusionslinie nach Anspruch 1, **dadurch gekennzeichnet, dass** der Volumenstrom der Absaugung (6) regel- und/oder steuerbar ist und/oder intermittierend betreibbar ist.

3. Extrusionslinie nach einem der vorigen Ansprüche, **dadurch gekennzeichnet, dass** der formgebende Dorn (28) am Umfang in einzelne Segmente (22) aufgeteilt ist, wobei jedes Segment (22) sowohl über eine Heizeinrichtung (33) wie auch eine Kühleinrichtung (34) verfügt.

4. Extrusionslinie nach einem der vorigen Ansprüche, **dadurch gekennzeichnet, dass** die Temperatur der einzelnen Segmente (29, 32) unabhängig voneinander steuer- oder regelbar ist.

5. Extrusionslinie nach einem der vorigen Ansprüche, **dadurch gekennzeichnet, dass** die abgesaugte warme Luft zur Energierückgewinnung einem Verbraucher (24) zuführbar ist.

6. Extrusionslinie nach einem der vorigen Ansprüche, **dadurch gekennzeichnet, dass** die Kammer (25) zumindest an einer Seite abgedichtet ist.

7. Extrusionslinie nach einem der vorigen Ansprüche, **dadurch gekennzeichnet, dass** die mehreren Funktionsbereichen sich überlappen.

8. Verfahren zum Erhöhen der Kühlleistung einer Extrusionslinie und zum energieeffizienten Extrudieren eines Kunststoffprofils, insbesondere eines Kunststoffrohres, das die Schritte umfasst,
a) Aufschmelzen von Kunststoff in einem Extruder (1),
b) Formen eines Kunststoffstranges und Zuführen des Kunststoffstranges zu einem Werkzeug (2),
c) Formen eines Kunststoffprofiles mittels des Werkzeuges (2) und
d) Kalibrieren und Aushärten mittels Kühlung des Profils in einer Kalibrierung (3), wobei
zusätzlich zur Außenkühlung in der Kalibrierung (3) das Profil (9) im Inneren gekühlt wird, und zur inneren Kühlung des Profils (9) die Luft entgegen der Extrusionsrichtung (7) mittels einer Absaugung (6) durchgesaugt wird,
wobei der Kunststoffstrang im Werkzeug (2) in mehrere Teilstränge aufgeteilt wird und die Temperatur der Schmelze vor Austritt aus dem Werkzeug (2) reduziert wird, **dadurch gekennzeichnet, dass** zur äußeren Kühlung des Profils (9) die Luft entgegen der Extrusionsrichtung (7) mittels eines Ventilators durch eine Kammer (25) an der Außenwandung des extrudierten Rohres vorbei geführt wird,
wobei zum Vergleichmäßigen der Wandstärke des Kunststoffrohres innerhalb eines Extrusionswerkzeuges (2), das mehrere Segmente (29, 32) aufweist, deren Temperatur gesteuert oder geregelt wird den einzelnen Segmenten (29, 32) unterschiedliche Temperaturen zugeordnet werden,
wobei jedes Segment (29, 32) sowohl geheizt als auch gekühlt werden kann.

9. Verfahren nach Anspruch 8, **dadurch gekennzeichnet, dass** die Luft mittels der Absaugung (6) mindestens mit einer Strömungsgeschwindigkeit durchgesaugt wird, die turbulent ist.

10. Verfahren nach Anspruch 8, **dadurch gekennzeichnet, dass** das Luftvolumen zwischen Absaugung (6) und dem Ende der Extrusionslinie (10) mindestens 1mal, vorzugsweise 2mal pro Minute ausgetauscht wird und/oder die Luftabsaugung intermittierend erfolgt.

11. Verfahren nach einem der Ansprüche 8 bis 9, **dadurch gekennzeichnet, dass** die Temperatur der Kunststoffschmelze mindestens in den Übergangsbereich zwischen Schmelzezustand und teilkristallinem oder Glaszustand gesenkt wird.

12. Verfahren nach Anspruch 8 bis 11, **dadurch gekennzeichnet, dass** die Luft einem Verbraucher (24) zur Nutzung der Wärme zugeführt wird.

13. Verfahren nach einem der Ansprüche 8 bis 12, **dadurch gekennzeichnet, dass** die Kunststoffschmelze drei Funktionsbereichen durchströmt, wobei die drei Funktionsbereiche fließend in einander übergehen.

## Claims

1. Extrusion line for producing plastic profiles, preferably plastic pipes, comprising at least
an extruder (1),
a tool (2),
a calibration device (3),
as well as further downstream equipment (4, 5),
at least the tool (2) featuring at least one aperture, and an extraction device being arranged in front of the tool as viewed in the extrusion direction, by means of which extraction device air in the interior of the plastic profile can be exchanged,
the tool (2) consisting of a plurality of functional regions with separate melt channels, by means of which the plastic melt can be divided into part melts and the temperature of the melt can be reduced,
**characterized in that**
a chamber (25) is arranged around the extruded pipe downstream from the calibration means (3),
a fan (26) being arranged on the chamber, by means of which air can be guided past the outer
wall of the extruded pipe counter to the extrusion direction (7),
the tool (2) comprising at least one shaping nozzle (27) and one shaping mandrel (28), and
the shaping nozzle being divided at the circumference into individual segments (10), each segment (10) having both a heating device (30) and a cooling device (31).

2. Extrusion line according to claim 1, **characterized in that** the volumetric flow of the extraction device (6) can be regulated and/or controlled and/or can be operated intermittently.

3. Extrusion line according to one of the preceding claims, **characterized in that** the shaping mandrel (28) is divided at the circumference into individual segments (22), each segment (22) having both a heating device (33) and a cooling device (34).

4. Extrusion line according to one of the preceding claims, **characterized in that** temperature of the individual segments (29, 32) can be controlled or regulated independently of one another.

5. Extrusion line according to one of the preceding claims, **characterized in that** extracted warm air can be fed to a consumer (24) for energy recovery.

6. Extrusion line according to one of the preceding claims, **characterized in that** the chamber (25) is sealed at least on one side.

7. Extrusion line according to one of the preceding claims, **characterized in that** the plurality of functional regions overlap one another.

8. Process for increasing the cooling capacity of an extrusion line and for the energyefficient extrusion of a plastic profile, particularly of a plastic pipe, comprising the steps
a) melting of plastic in an extruder (1),
b) shaping of a plastic strand and insertion of the plastic strand into a tool (2),
c) shaping of a plastic profile by means of the tool (2), and
d) calibration and hardening of the profile through cooling in a calibration device (3),
the profile (9) being cooled within the calibration device (3) from inside in addition to the exterior cooling,
and
air being sucked through counter to the extrusion direction for interior cooling of the profile by means of an extraction device (6),
the plastic strand inside the tool (2) being divided into several sub-strands, and the temperature of the melt being reduced before the exit from the tool (2),
**characterized in that**
for the exterior cooling of the profile (9) the air is ducted through a chamber (25) along the outer wall of the extruded pipe counter to the extrusion direction (7) by means of a fan,
whereby for homogenizing the wall thickness of the plastic pipe within an extrusion device (2) featuring several segments (29, 32) whose temperature is controlled or regulated, the separate segments are assigned with different temperatures,
each segment (29, 32) can be heated as well as cooled.

9. Process according to claim 8, **characterized in that** by means of the extraction (6), the air is sucked through with a flow speed that is at least turbulent.

10. Process according to claim 8, **characterized in that** the air volume between the extraction device (6) the end of the extrusion line (10) is exchanged at least once, preferably twice per minute and/or that the air extraction is carried out intermittently.

11. Process according to one of the claims 8 to 9, **characterized in that** the temperature of the plastic melt is reduced to a level at least equivalent to the transition range between melt state and partially crystalline or glassy state.

12. Process according to claims 8 to 11, **characterized in that** the air is supplied to a consumer (24) in order to make use of the heat.

13. Process according to one of the claims 8 to 12, **characterized in that** the plastic melt flows through three functional areas, the three functional areas seamlessly flow into one another.

## Revendications

1. Ligne d'extrusion pour la production de profiles en plastique, de préférence de tubes en plastique, comprenant au moins
une extrudeuse (1),
un outil (2),
un outil de calibrage (3)
ainsi que d'autres installations subséquentes (4, 5),
au moins l'outil (2) présentant au moins une ouverture (8) et un dispositif d'extraction (6) étant disposé avant l'outil (2) vu dans la direction d'extrusion (7), au moyen duquel l'air dans l'intérieur du profil en plastique (9) est échangeable,
l'outil (2) consistant de plusieurs zones fonctionnelles avec des canaux de fusion séparés au moyen desquels la matière plastique fondue peut être divisée en matières fondues séparées et la température de la matière fondue peut être réduite,
**caractérisée en ce qu'**
une chambre (25) étant disposée autour du tube extrudé à la suite de l'outil de calibrage (3),
un ventilateur étant disposé à la chambre (25), au moyen duquel de l'air peut être dirigé le long du paroi extérieur du tube dans le sens opposé à celui de la direction d'extrusion (7),
l'outil (2) comprenant au moins une buse de moulage (27) et un mandrin de moulage (28) et
la buse de moulage (27) étant divisée sur la périphérie en segments séparés (10), chaque segment (10) comprenant un dispositif de chauffage (30) ainsi qu'un dispositif de refroidissement (31).

2. Ligne d'extrusion selon la revendication 1, **caractérisée en ce que** le débit volumique du dispositif d'extraction (6) est réglable et/ou contrôlable et/ou peut être actionné de façon intermittente.

3. Ligne d'extrusion selon l'une quelconque des revendications précédentes, **caractérisée en ce que** le mandrin de moulage (28) est divisé à la périphérie en segments séparés (22), chaque segment présentant au moins un dispositif de chauffage (30) ainsi qu'un dispositif de refroidissement (31).

4. Ligne d'extrusion selon l'une quelconque des revendications précédentes, **caractérisée en ce que** la température des segments individuels (29, 32) peut être contrôlée ou réglée de manière indépendante.

5. Ligne d'extrusion selon l'une quelconque des revendications précédentes, **caractérisée en ce que** l'air chaud aspiré peut être livré à un consommateur (24) à des fins de récupération d'énergie.

6. Ligne d'extrusion selon l'une quelconque des revendications précédentes, **caractérisée en ce que** la chambre est scellée sur au moins un côté.

7. Ligne d'extrusion selon l'une quelconque des revendications précédentes, **caractérisée en ce que** les plusieurs zones fonctionnelles se chevauchent.

8. Procédé pour l'augmentation de puissance de refroidissement d'une ligne d'extrusion et pour l'extrusion d'un profile en matière plastique, en particulier d'un tube en plastique, de manière efficace d'un point de vue énergétique, comprenant les étapes consistant à
a) fusion de plastique dans une extrudeuse (1),
b) façonnage d'un cordon en matière plastique et insertion dudit cordon en matière plastique dans un outil (2),
c) façonnage d'un profile en matière plastique au moyen dudit outil (2) et
d) calibrage et durcissement par refroidissement du profile dans un outil de calibrage (3),
le profile (9) étant refroidi à l'intérieur en plus du refroidissement extérieur dans l'outil de calibrage (3),
et
l'air étant aspiré par un dispositif d'extraction (6) dans le sens opposé à celui de la direction d'extrusion (7) aux fins d'un refroidissement extérieur du profile (9),
le cordon en matière plastique étant divisé dans l'outil (2) en plusieurs sous-cordons et la température de la matière fondue étant réduite avant la sortie de l'outil (2),
**caractérisé en ce que**
aux fins du refroidissement extérieur du profile (9), l'air est dirigé par un ventilateur à travers une chambre (25) le long du paroi extérieur du tube extrudé au sens opposé à celui de la direction d'extrusion (7),
l'homogénéisation de l'épaisseur du paroi du profile en matière plastique à l'intérieur d'un dispositif d'extrusion (2), qui comprend plusieurs segments (29, 32) dont la température peut être contrôlée ou réglée, étant réalisée en attribuant différentes températures aux segments individuels (29, 32),
chaque segment (29, 32) pouvant être aussi bien chauffé que refroidi.

9. Procédé selon la revendication 8, **caractérisé en ce que** l'air est aspiré au moyen du dispositif d'extraction (6) à une vitesse d'écoulement qui est au moins turbulente.

10. Procédé selon la revendication 8, **caractérisé en ce que** le volume d'air entre le dispositif d'extraction (6) et la fin de la ligne d'extrusion (10) est échangé au moins une fois, de préférence deux fois par minute et/ou que l'extraction d'air se fait de manière intermittente.

11. Procédé selon l'une quelconque des revendications 8 à 9, **caractérisé en ce que** la température de la matière plastique fondue est réduite jusqu'au moins le niveau de la zone de transition entre l'état fondu et l'état partiellement cristallin ou vitreux.

12. Procédé selon les revendications 8 à 11, **caractérisé en ce que** l'air est livré à un consommateur (24) aux fins de l'utilisation de l'énergie thermique.

13. Procédé selon l'une quelconque des revendications 8 à 12, **caractérisé en ce que** la matière plastique fondue traverse trois zones fonctionnelles, lesdites zones fonctionnelles s'imbriquent les unes dans les autres.
